# EUROPEAN PATENT APPLICATION

(11) **EP 3 361 023 A1**
(43) Date of publication of application: **15.08.2018**
(21) Application number: 16853144.0
(22) Date of filing: 05.10.2016
(51) Int. Cl.: E04H 12/12, F03D 13/20, E04G 11/22

(54) **CONCRETE TOWER AND CLIMBING OR SELF-CLIMBING FORMWORK DEVICE FOR THE CONSTRUCTION THEREOF IN SITU**

(30) Priority: 07.10.2015 ES 201531439
(71) Applicant: Ingecid, Investigación Y Desarrollo de Proyectos S.L., 39012 Boo de Piélagos (Cantabria) (ES)
(72) Inventor: RICO ARENAL, Jokin, 39478 Boo de Piélagos (Santander) (ES)
(74) Representative: García Gómez, José Donato
(86) International application number: PCT/ES2016/070706
(87) International publication number: WO 2017/060552

(57) **Abstract**

The tower, applicable in the installation of wind turbines, comprises: a lower end (11) having a general polygonal configuration formed by flat sides (12) and cylindrical portions (13) arranged between consecutive flat sides (12); the flat sides (12) having a decreasing width in the upward direction throughout the tower (1), and the cylindrical portions (13) having an invariable shape throughout the tower (1); the tower (1) having, at its top end (11), a circular outline made by the cylindrical portions (13), which maintain an invariable shape throughout the tower (1). The invention includes a climbing formwork device for building the tower.

## Description

### Object of the invention

The object of this invention is a concrete tower and a climbing or self-climbing device for its building "onsite".

The tower in question, made with the formwork device, has a hollow concrete body of varying cross-section in the vertical direction with the particularity that the formwork of each tower section is totally equal to the formwork of the previously built section of the tower immediately below, only varying, in each formwork section of tower immediately above, the number of pieces used in the configuration of the section below, providing a tower of varying and changeable geometry from a lower polygonal section (combining flat surfaces and curved surfaces) to an exclusively curved section at the top end of the tower.

### Technical field of the invention

This invention is applicable in the field of building concrete towers, and preferably, but not limited to towers for the installation of wind turbines, which require on their top a circular section where the wind turbine is coupled by means of a transition piece.

### State of the art

In the building of concrete towers of varying cross-section, for example conical towers, it is necessary to use different formwork panels to cover the whole of the tower to be built and then pouring the concrete, the tower keeping this shape. However, at great heights, what is done is to carry out the building through successive sections; the formwork is made for one section, the concrete is poured, and then a second section is framed, which entails the changing of the formwork's curvature at each lift, an expensive operation, and repeating this process until finishing the height of the tower.

There are formwork panels with adjustable curvature in the market, which allow adjusting their curvature before being assembled and secured; however, this adjustment is particularly difficult especially if any of the panels has undergone some deformation.

Of the same applicant is the national patent ES2 404 781, which discloses a building system and method for a concrete tower as well as the tower thus obtained. Such reinforced or prestressed concrete tower is divided into various sides, the number of sides may be varied, said sides being curved from the base of the tower up to the greatest height; for example, it can have a square base with curved sides to finish the section at the top of the tower with the same four sides with curved sides but with a cross-section of lower dimension.

To build the successive sections of such tower, the climbing technique is also used, consisting of uninstalling the formwork panels at lower heights and installing them at an immediately superior height to make the formwork of this new dimension and to build an additional tower section.

The problem with such tower are the corners, which angle changes with height, which involves a small clearance between the adjoining sides of the framework as the sides are formed by the intersection of "n" cylindrical surfaces defining "N" sides of the concrete tower. This clearance can be absorbed in a concrete tower maintaining the functionality of the structure.

Another prior art document is the international application WO 2004/083633 of VESESS WIND SYSTEMS, which discuss a method of building towers for wind turbines. In that patent the tower is created by means of sections that are configured by the joining of two or three curved plates; each section reducing its cross-section until it completes a conical tower. It differs from this patent in that it is a metal structure of prebuilt parts for building a tower that is configured by the joining of the parts built in the factory and assembled onsite. This prior art has the drawback of having to solve the persistent problem of the assembly of the pieces as both vertical and horizontal joints are generated since they are prefabricated parts.

### Description of the invention

The present invention relates to a concrete tower made "onsite" and to a suitable formwork device for the formation of successive sections of formwork applicable in the by-segment or by-section building of said tower with reinforced or post-tensioned concrete through the technique of climbing or self-climbing. This invention has features aimed at solving the problem exposed and avoiding the existence of clearances between the adjoining sides of the formwork, and to provide a uniform surface across the entire outer surface of the concrete tower.

This tower of the invention, when made "onsite", does not present any kind of join that needs to be treated, proceeding to pouring new concrete on the previous layer.

According to the invention, this concrete tower comprises, at one lower end, a polygonal general configuration, consisting of flat sides and cylindrical portions arranged between the consecutive flat sides, the flat sides having a decreasing width in the upward direction throughout the tower and the cylindrical portions having an invariable shape throughout the tower.

The above-mentioned flat sides have a decreasing width in the upward direction, from a maximum width corresponding to the lower end of the tower to zero width at the top end of the tower; the tower having, at said top end, a circular outline made by the cylindrical portions that maintain an invariable shape throughout the tower.

With these features, the concrete tower changes the outline in a vertical direction, starting with a polygonal shape with circular vertexes at the bottom and ending with a top end of circular outline.

For the building of this concrete tower by sections, using the climbing or self-climbing technique, a climbing formwork device has been developed, which allows the forming of successive tower sections by using their constituent parts by varying only, in each section of formwork immediately above, the number of parts used in the configuration of the lower section, removing on each sides one or more flat pieces, or producing an equivalent overlap.

This climbing formwork device comprises: - corner pieces of formwork for the definition of the cylindrical portions of the tower; which corner pieces have: an upper end and a lower end defining two parallel planes, a curved area oriented longitudinally along said corner pieces, said curved area having a constant curvature radius and a straight generatrix with a predetermined slope relative to the parallel planes defined by the upper and lower ends of said corner pieces; and intermediate rectangular pieces, which are arranged laterally attached between the corner pieces and with the same slope as the generatrix of the corner pieces, said rectangular pieces defining, in successive formwork sections, flat surfaces corresponding to the flat sides of the tower.

In a first embodiment, the corner pieces of the formwork have, at the opposite sides of the curved area, flat extensions of triangular-rectangular configuration, each of said flat extensions having a base and a height of matching dimensions, respectively, with the half of the base and with the height of the rectangular pieces, which must be removed in each lift.

These flat extensions of triangular-rectangular configuration define, in the successive sections or lifts of the formwork, a junction area between the rounded corner pieces and the intermediate rectangular pieces.

In an embodiment variant of the formwork described above, the corner pieces of the formwork have, in the generatrix direction, a constant width; that is, on their sides they do not have the flat extensions of rectangular prismatic configuration; which allows said corner pieces to be moveable without clearances and in the generatrix direction to define, in the successive sections of formwork, the cylindrical portions that extend throughout the tower and are arranged between the flat sides, which have a decreasing width in the upward direction.

In this embodiment variant, the formwork further comprises flat pieces of triangular-rectangular configuration, which have a base and a height of dimensions matching respectively with the half of the base and with the height of the rectangular pieces, and which are arranged one on each side of the curved corner pieces in the formwork of each tower section.

This system allows creating multi-sided towers; in the case of four sides, four circular pieces (a quarter of a circumference) that configure the corners of the formwork of this polygonal shape are arranged on the base. Between each curved area the flat pieces are arranged, which are those that will be removed, at least one of them on each side, in the forming of the next section.

Another constructive advantage is that it is ideal for the formwork technique with self-climbing system, without the need to use cranes as the next level of formwork is raised from the previous one that has been placed. To this end, rails or guides are placed, through which the self-climbing system ascends consisting of a platform moving along the guides (two or three on each of the cylindrical sides of the tower) driven by a hydraulic and/or mechanical drive.

This self-climbing system is very simple for the building of the tower of the invention, as the curved areas of the tower are taken advantage of to place the two or three self-climbing system guides, following the generatrixes of the cylinder forming the corners, completely straight in the whole of the tower under construction, allowing the onsite work processes to be accelerated.

### Description of the figures

In order to complement the description that is being carried out and with the purpose of facilitating the understanding of the features of the invention, the present description is accompanied by a set of drawings wherein, by way of a non-limiting example, the following has been represented:
- Figure 1 shows an elevational view of an exemplary embodiment of the four-sided tower according to the invention.
- Figure 2 shows a top plan view of the four-sided tower of the above figure.
- Figure 3 shows a perspective view of the different constituent parts of an exemplary embodiment of a formwork device for building the four-sided tower of the above figures.
- Figures 4a to 4g show schematically successive building stages of the last three sections of the concrete tower of Figures 1a and 1b with the formwork device shown in Figure 3.
- Figure 5 shows a perspective exploded view of the different constituent parts of an embodiment variant of the formwork device shown in Figure 3 for a four-sided tower.
- Figures 6 and 7 show both elevational and top plan views of an exemplary embodiment of a three-sided tower according to the invention.
- Figure 8 shows an embodiment variant of the formwork shown in Figure 3, suitable for the construction of three-sided towers, representing the last three sections of formwork for building a triangular tower.

### Preferred embodiment of the invention

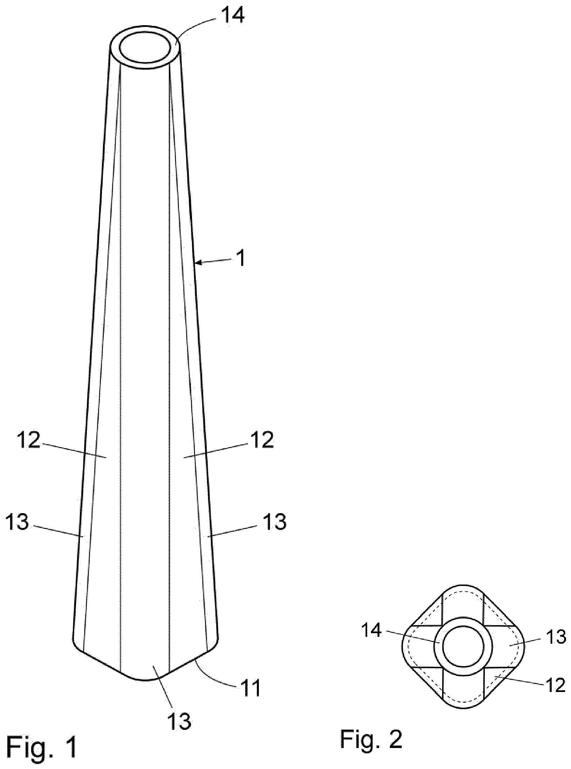

As can be seen in Figure 1, the concrete tower referenced as (1) as a whole comprises a hollow concrete body, of varying cross-section in vertical direction, said tower having a lower end (11) with a polygonal configuration formed by flat sides (12) and cylindrical portions (13) arranged between consecutive flat sides (12).

The flat sides (12) of the tower have a decreasing width in the upward direction throughout the tower until reaching a top end (14), where the flat sides (12) have zero width; and the cylindrical portions (13), of invariable shape and constant curvature radius throughout the tower, converge with each other providing said top end (14) with a circular outline.

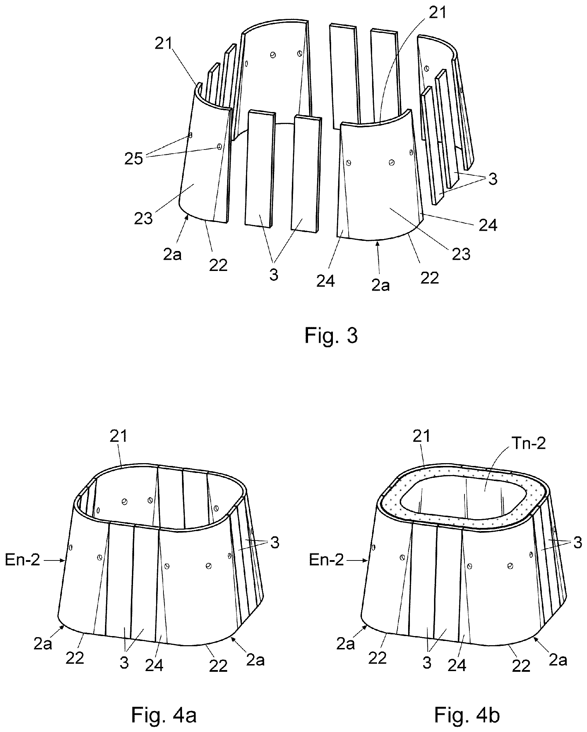

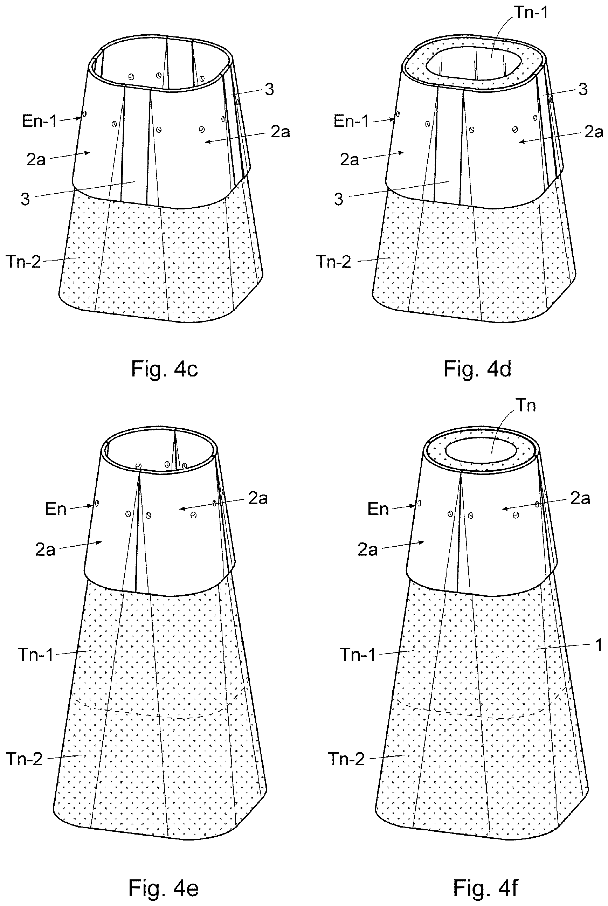

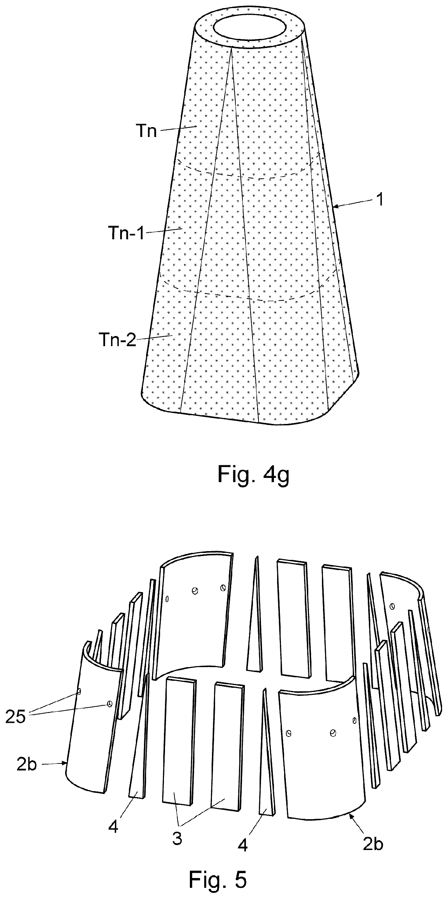

In the embodiment shown in Figures 3 and 4, a formwork device comprising formwork corner pieces (2a) for defining the cylindrical portions (13) of the tower (1) and intermediate rectangular pieces (3) of a height equal to that of the corner pieces (2a) can be seen.

Said corner pieces (2a) have an upper end (21) and a lower end (22) defining two parallel and horizontal planes in the use position of the formwork; said pieces (2a) further having a curved area (23) longitudinally oriented and two flat extensions (24) of triangular-rectangular configuration arranged on opposite sides of the curved area (23).

Said curved area (23) has a constant curvature radius and a straight generatrix with a predetermined slope for the parallel planes defined by the upper and lower ends (21, 22) of said corner pieces. The slope of said generatrix is that which defines the slope of the cylindrical portions (13) in the tower (1).

The flat extensions (24) defined on opposite sides of the corner pieces (2a) have a base and height of dimensions matching with the half of the base and height of the rectangular pieces (3), arranged in the use position of the formwork coplanar with said rectangular pieces (3) to form the flat sides (12) of the tower (1).

Figures 4a to 4g show successive building steps of the last three sections of the concrete tower (1) represented in Figures 1 and 2, using the climbing technique and the formwork pieces shown in Figure 3; considering that in a tower of more than 120 m. high the number of sections would be greater than 24 for a 5-metre formwork.

Specifically, in Figure 4a, a first section (E n-2) of formwork is formed arranging four corner pieces (2a) with their lower ends (22) coplanar and four pairs of intermediate rectangular pieces (3) arranged between and laterally attached to the corner pieces (2a).

Subsequently, as shown in Figure 4b, the concrete is poured into the interior of the first section of formwork (E n-2) and it is left to set to obtain a first section of the tower (T n-2).

Subsequently, as shown in Figures 4c and 4d, a second section of formwork (E n-1) is formed by removing on each side thereof one of the intermediate pieces (3).

The flat extensions (24) of triangular-rectangular configuration defined on the opposite sides of the corner pieces (2a) have at their base a width equal to half of the width of the rectangular pieces (3), which ensures that in this second section of formwork (E n-1) the corner pieces (2a) and the rectangular pieces (3) are perfectly attached laterally, this second section of formwork (E n-1) defining interiorly a constituent surface of an extension of the surface of the first tower section (T n-2) previously built.

Afterwards, as shown in Figure 4d, the concrete pouring is performed in the interior of the second section of formwork (E n-1) to build a second tower section (T n-1).

In order to perform the climbing of the formwork, it is envisaged that the pieces thereof can be supported by anchorages arranged in the previous lift. Thus, either by the help of a crane (climbing formwork) or with automatic climbing elements (self-climbing formwork), the formwork is positioned in the successive lifts.

The constant curvature of the corner pieces (2a) allows them to be moved in the direction of the generatrix of its curved area (23) to be arranged in successive sections of the formwork, ensuring the definition of the cylindrical portions (13) in the tower.

As can be seen in Figures 4e and 4f, once the sections (T n-2, and T n-1) of the tower are built, the rectangular pieces (3) are removed from the second section of formwork (E n-1) and the pieces (2a) are conveniently positioned to form a third section of formwork (E n) in which said pieces (2a) are attached directly to each other, this third section of formwork (E n) having a round upper mouth.

Through the pouring of concrete into its interior, as shown in Fig. 4f, and the setting thereof, a third and final section (T n) of the tower (1) represented in Figure 4g is formed.

Figure 5 shows an embodiment variant of the formwork of Figure 3, which has an operation similar to that described in Figures 4 and the only difference is that the corner pieces (2b) do not have flat extensions (24) on their sides, this formwork comprising instead flat pieces (4) of triangular-rectangular configuration and dimensions analogous to the said flat extensions (24) and which fulfil the same function as those.

With this formwork design, for application in wind turbines, after defining the section corresponding to the last section of formwork (E n), modifying the number of rectangular pieces (3) used in the formwork section corresponding to the base or lower end of the tower, a tower with different sizes of base and height can be built without having to modify the corner pieces (2b).

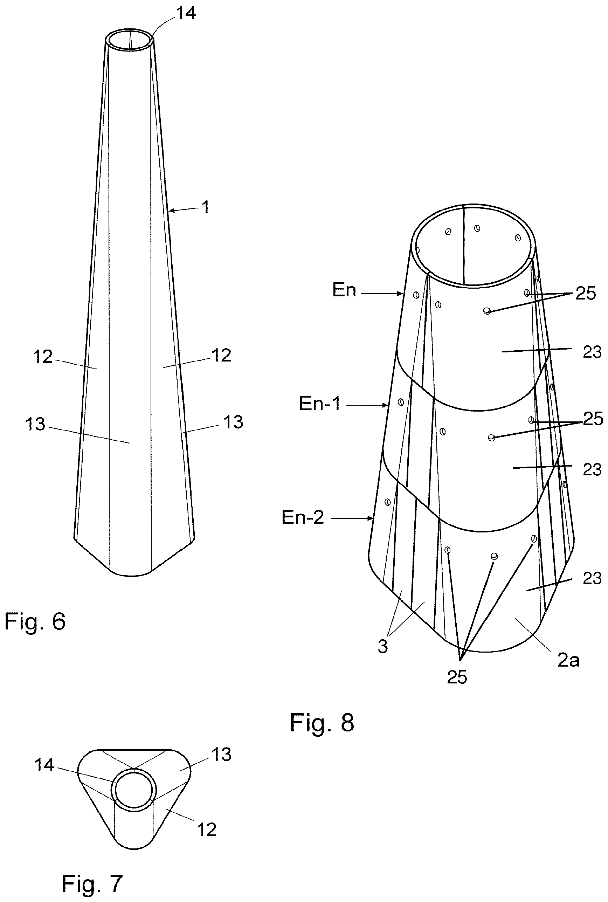

Figures 6 and 7 show an embodiment variant of the tower, with features similar to the tower described above, but with three flat sides (12) and three cylindrical portions (13) instead of four; in this case being built with a formwork shown in Figure 8, wherein the corner pieces (2a) have a curved area (23) corresponding to a cylindrical sector of an amplitude equal to one third of the outline of a cylinder.

As can be seen from the exploded views of the two formwork embodiments, shown in Figures 3 and 5, the corner pieces (2a, 2b) of the formwork are provided with holes (25) for anchorage to the lifts or for positioning of self-climbing guides or rails.

Once the nature of the invention as well as an example of preferred embodiment have been sufficiently described, it is stated for all pertinent purposes that the materials, form, size and arrangement of the elements described are susceptible to changes, provided these do not involve an alteration of the essential features of the invention that are claimed subsequently.

## Claims

1. A concrete tower, applicable in the installation of wind turbines, comprising a hollow sectional body of varying cross-section in the vertical direction, **characterised in that** it comprises: a lower end (11) having a general polygonal configuration formed by flat sides (12) and cylindrical portions (13) arranged between the consecutive flat sides (12); the flat sides (12) having a decreasing width in the upward direction throughout the tower (1), and the cylindrical portions (13) having an invariable shape throughout the tower (1); the tower (1) having, at its top end (11), a circular outline, consisting of the cylindrical portions (13) maintaining an invariable shape throughout the tower (1).

2. The concrete tower according to claim 1, **characterised in that** the flat sides (12) have a decreasing width in the upward direction from a maximum width corresponding to the lower end of the tower, and a zero width at the top end of the tower.

3. A climbing or self-climbing formwork device for building "onsite" the tower of the preceding claims; **characterised in that** it comprises:
- corner pieces (2a, 2b) of formwork for defining the cylindrical portions (13) of the tower; which pieces have an upper end (21) and a lower end (22) defining two parallel planes; a curved area (23) oriented longitudinally along said corner pieces (2a, 2b); said curved area (23) having a constant curvature radius and a straight generatrix with a predetermined slope with respect to the parallel planes defined by the upper and lower ends (21, 22) of said corner pieces;
- intermediate rectangular pieces (3), which are arranged laterally attached between the corner pieces (2a, 2b) and with the same slope as the generatrix of the corner pieces; said rectangular pieces (3) defining, in successive sections of formwork, flat surfaces corresponding to the flat sides (12) of the tower.

4. The formwork device according to claim 3, **characterised in that** the corner pieces (2a) have, on opposite sides of the curved area (23), a respective flat extension (24) of triangular-rectangular configuration, each of said flat extensions (24) having a base and a height of dimensions matching respectively with the half of the base and with the height of the rectangular pieces (3).

5. The formwork device according to claim 3, **characterised in that** it comprises flat pieces (4) of triangular-rectangular configuration, which have a base and a height of dimensions matching respectively with the half of the base and with the height of the rectangular pieces (3), and which are arranged in the formwork of each tower section (1) one to each side of the curved corner pieces (2b).

6. The formwork device according to claim 3; **characterised in that** the curved area (23) of the corner pieces (2a, 2b) of the formwork have a constant width in the direction of the generatrix.

7. The formwork device, according to any of the claims 3 to 6, **characterised in that** the corner pieces (2a, 2b) of the formwork are provided with holes (25) for anchorage to the lifts or for positioning of self-climbing guides or rails.
